# EUROPEAN PATENT SPECIFICATION

(11) **EP 3 062 559 B1**
(45) Date of publication and mention of the grant of the patent: **09.10.2019**
(21) Application number: 15156319.4
(22) Date of filing: 24.02.2015
(51) Int. Cl.: H04W 36/14

(54) **APPARATUS, METHOD AND COMPUTER PROGRAM FOR A TRANSCEIVER OF A MOBILE COMMUNICATION SYSTEM**
VORRICHTUNG, VERFAHREN UND COMPUTERPROGRAMM FÜR EINEN SENDER-EMPFÄNGER EINES MOBILEN KOMMUNIKATIONSSYSTEMS UND EIN BACKHAUL-MODEM
APPAREIL, PROCÉDÉ ET PROGRAMME INFORMATIQUE POUR UN ÉMETTEUR-RÉCEPTEUR D'UN SYSTÈME DE COMMUNICATION MOBILE ET UN MODEM DE RÉSEAU TERRESTRE

(43) Date of publication of application: 31.08.2016
(73) Proprietor: Nash Innovations GmbH, 90491 Nürnberg (DE)
(72) Inventor: Reichenbach, Jörg Arnt, 90542 Eckental (DE)
(74) Representative: 2SPL Patentanwälte PartG mbB

(56) References cited:
- EP-A1- 2 830 356
- WO-A1-2012/140999
- WO-A1-2013/135293
- US-A1- 2013 252 614
- US-A1- 2014 301 370
- US-A1- 2014 378 140

## Description

### Technical Field

Embodiments relate to an apparatus, a method and a computer program for a transceiver of a mobile communication system and a backhaul modem of a relay station transceiver, and more particularly, but not exclusively, to a mechanism that enables a transceiver to frequently monitor overlaying networks providing higher or potentially higher data rates and to handover in case such network is present.

### Background

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. Users of today's handhelds become more difficult to satisfy. While old feature phones generated only data or voice traffic, current smartphones, tablets, and netbooks run various applications in parallel that can fundamentally differ from each other. Compared to conventional phones, this application mix leads to a number of new characteristics. For example, highly dynamic load statistics result, where the average load is increasing. Moreover, the number of networks for voice and data access is also increasing, therewith, roaming options between these networks become available when multiple network layers overlap or at network boundaries, respectively.

If multiple network layers are available mobile transceivers may choose a certain network based on different criteria, such as the operator of a network, hardware capability, service class or service demand, etc. Once services are provided by multiple network layers, inter-system or inter-frequency measurements may put burdens on the modems of mobile transceivers, as service interruptions may be necessary to measure signals of other systems or frequencies. In order to avoid service interruption such inter-system or inter-frequency measurements may only be configured by a network under certain circumstances, e.g. coverage degradation, overload, etc.

Document US 2013/0252614 A1 discloses a communications apparatus, which includes a processor coupled to at least one Radio Frequency (RF) transceiver and at least one baseband processing device and capable of communicating with a first wireless network belonging to a first Radio Access Technology (RAT) and a second wireless network belonging to a second RAT having a higher data transmission throughput than the first RAT. Document US 2014/0378140 A1 describes a method and apparatus for inter RAT cell selection. A mobile transceiver scans for cells of a different RAT although the cell the mobile transceiver is camped on does not provide information on such a cell in a broadcast neighbor cell list. Document WO 2012/140999 A1 discloses a mobile communication system with a base station and a relay station, where the relay station acquires a donor list indicating at least one candidate cell for a backhaul link. The base station and the relay station determine cell management information based on which a donor cell is selected from the list. Document WO 2013/135293 A1 describes a concept for controlling two transceivers of two communication systems for transmitting data to a user based on throughput estimations.

Document EP 2830356 discloses a vehicular relay node (RN) which uses cells neighbourhood sniffing for recognizing neighbour cell relations in order to reduce the latencies involved in a handover procedure. The sniffing procedure of a vehicular RN is based on a state of movement of the vehicle. Information on how and how often a neighbour cell measurement is carried out, on which quantity shall be measured is determined based on e.g. the speed of the vehicle.

Document US 2014/0301370 discloses a handover procedure for handing over a mobile relay from a source donor eNB to a target donor eNB.

### Summary

The invention is defined in the appended set of claims.

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide an apparatus, a method and a computer program for a transceiver of a mobile communication system and a backhaul modem for a relay station transceiver. Embodiments may provide enhanced service quality as frequent measurements are carried out on cells of other communication systems or technologies in order to handover a transceiver to a higher or potentially higher rate cell. In particular, mobile relay station transceivers may benefit from higher data rates, as they may relay bundled service connections or links towards multiple mobile transceivers in a single connection towards the infrastructure of a mobile communication system.

Embodiments provide an apparatus for a transceiver of a mobile communication system. The mobile communication system comprises at least a first radio cell. The apparatus comprises a transceiver module to communicate with the at least first radio cell using a first data rate. The apparatus further comprises a control module to control the transceiver module, and to frequently obtain information related to measurement results on signals of a second radio cell. The second radio cell is configured to provide a wireless service with a second data rate. The control module is further configured to determine whether the second data rate of the second radio cell is higher or potentially higher than the first rate. The control module is further configured to affect handover or reselection of the transceiver from the first cell to the second cell if the second data rate is higher or potentially higher than the first data rate. Embodiments may enable service provision by a cell with a (potentially) higher or even the highest data rate.

In some embodiments the second cell overlaps the first radio cell and uses a different radio access technology than the first cell. Embodiments may enable service provision by an access technology with a (potentially) higher or even the highest data rate. The control module may be configured to receive information related to measurement configurations from the mobile communication system. The control module may be configured to frequently obtain the information related to measurement results on signals of the second radio cell if the information related to measurement configurations indicates measurements on one or more cells different from the second cell. Embodiments may allow service provision by a better cell, even if said cell is not configured to be measured by the mobile communication system service the transceiver.

In further embodiments the control module may be configured to measure radio signals of the second radio cell using the transceiver module. Embodiments may allow reusing the transceiver module for communicating with the first cell and measuring the second cell. The control module may be configured to measure radio signals of the second radio cell while interrupting the communication of the transceiver module with the first cell. Embodiments may interrupt a communication in order to measure cells potentially offering higher or potentially higher data rates, therewith taking chances of improving the service quality in case of handover to such a cell offering a higher data rate. The control module may be configured to transfer the transceiver to an inactive or idle state and to measure radio signals of the second radio cell in the inactive or idle state. Embodiments may use a conventional cell selection or cell re-selection mechanism to transfer the transceiver to the higher or potentially higher rate cell. For example, the control module may then be configured to affect deactivation of the communication between the transceiver and the first cell in case the second data rate is (potentially) higher than the first data rate, and to affect the handover by letting the transceiver reselect the second cell in an inactive mode. In some embodiments the control module may be configured to measure radio signals of the second radio cell by instructing a mobile transceiver to carry out measurements on radio signals of the second radio cell and to report information related to measurement results. Embodiments may use mobile transceivers of the mobile communication system to carry out measurements on the second cell.

In some embodiments the apparatus may further comprise a receiver module, and the control module may be configured to measure radio signals of the second radio cell using the receiver module. Embodiments may provide enhanced performance by using a second receiver module or a sniffer to take measurements on the second cell. The control module may be configured to measure radio signals of the second radio cell using the receiver while the first transceiver module communicates with the first cell. Embodiments may allow measuring the second cell while up-keeping communication with the first cell. In further embodiments the transceiver is comprised in a mobile relay station transceiver. The mobile relay station transceiver comprises the transceiver for communicating with the infrastructure of the mobile communication system, and the mobile relay station transceiver comprises a base station transceiver for generating one or more cells to communicate with one or more mobile transceivers. Embodiments may provide a mobile relay station transceiver having improved performance.

The control module may be further configured to affect the handover of the modem by degrading information related to quality measurements carried out on signals of the first cell in some embodiments. Embodiments may allow re-using conventional mechanisms by manipulating measurement results to transfer to the second cell. For example, the control module may be configured to provide information related to degraded measurement results or reports to the first cell using the transceiver module. In further embodiments the control module may be configured to provide information related to absolute degraded measurement results or relative offsets for measurement results to degrade the measurement results of the first cell. Embodiments further provide a backhaul modem of a mobile relay station transceiver comprising the above-described apparatus.

Embodiments further provide a method for a transceiver of a mobile communication system. The mobile communication system comprises at least a first radio cell. The method comprises communicating with the at least first radio cell using a first data rate, and frequently obtaining information related to measurement results on signals of a second radio cell. The second radio cell is configured to provide a wireless service with a second data rate. The method further comprises determining whether the second data rate with the second radio cell is higher or potentially higher than the first rate, and affecting handover or reselection of the modem from the first cell to the second cell if the second data rate is higher or potentially higher than the first data rate.

Embodiments further provide a computer program having a program code for performing one or more of the above described methods, when the computer program is executed on a computer, processor, or programmable hardware. A further embodiment is a computer readable storage medium storing instructions which, when executed by a computer, processor, or programmable hardware, cause the computer to implement one of the methods described herein.

### Brief description of the figures

Some other features or aspects will be described using the following non-limiting embodiments of apparatuses and/or methods and/or computer programs and/or computer program products by way of example only, and with reference to the accompanying figures, in which
Fig. 1 illustrates a block diagram of an embodiment of an apparatus for a transceiver;
Fig. 2 shows a further embodiment of a mobile relay station transceiver comprising an embodiment of an apparatus; and
Fig. 3 shows a block diagram of a flow chart of an embodiment of a method for a base station transceiver.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g*., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Embodiments may provide a method for forcing handover or re-selection to higher Radio Access Technologies (RAT) in mobile networks for devices that are configured to provide a backhaul connection for mobile cells or mobile hotspots. In the following a higher RAT or next generation RAT may provide a (potentially) higher network performance than a previous RAT generation ("lower" RAT). Embodiments may further relate to wireless networks having intelligent mobile devices driving or moving in its coverage area. Some embodiments are based on the finding that operators might not trigger handovers to higher RAT as long as the call is ongoing and in good coverage on the lower RAT. For example, a handover from 3^{rd} Generation (3G) to 4^{th} Generation (4G) network might not be triggered during an active call in good 3G coverage. This might be less of a problem for normal UEs because these usually end the call after some time or go to an inactive call state due to some gaps in data transmission. Then they can change to the higher RAT by reselection. However, this might be a more severe problem for devices always sending/receiving data such as backhaul modems for vehicular network access devices. Once these devices are moved to a lower RAT type (due to bad coverage of the higher RAT) they would never go back to higher layer technologies (even though these provide good coverage again).

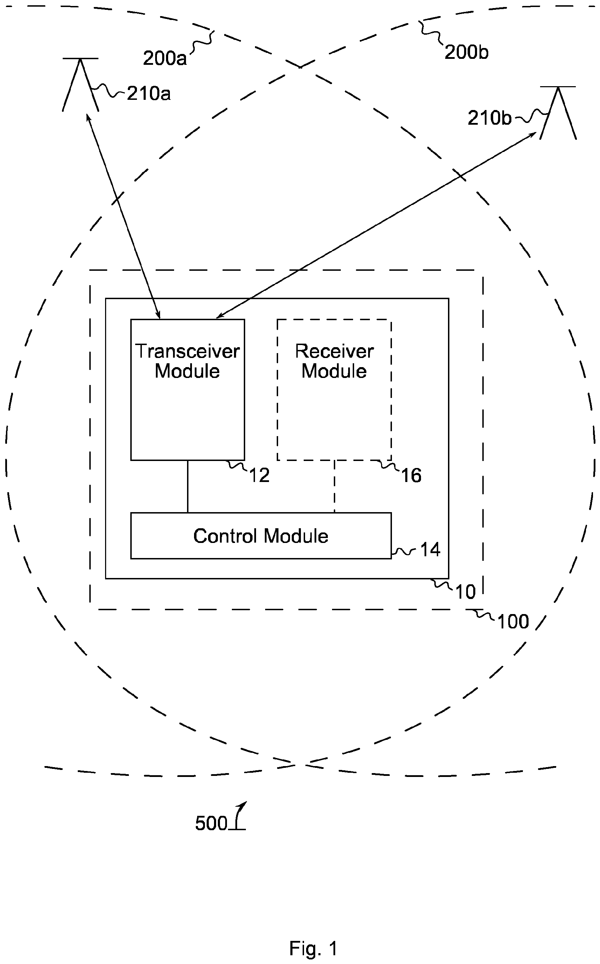

Fig. 1 illustrates a block diagram of an embodiment of an apparatus 10 for a transceiver 100 of a mobile communication system 500. The mobile communication system comprises at least a first radio cell 200a. The apparatus 10 comprises a transceiver module 12 to communicate with the at least first radio cell 200a using a first data rate. The apparatus further comprises a control module 14 to control the transceiver module 12, which is coupled to the transceiver module 12. The control module 14 is configured to frequently obtain information related to measurement results on signals of a second radio cell 200b. The second radio cell 200b is configured to provide a wireless service with a second data rate. The control module 14 is further configured to determine whether the second data rate of the second radio cell 200b is higher or potentially higher than the first rate, and to affect handover or reselection of the transceiver 100 from the first cell 200a to the second cell 200b if the second data rate is higher or potentially higher than the first data rate. Furthermore, Fig. 1 illustrates a first base station transceiver 210a generating the first cell 200a and a second base station transceiver 210b generating the second cell 200b. The first and second base station transceivers 210a and 210b may belong to the same or to different mobile communication systems 500.

In embodiments the mobile communication system 500 may, for example, correspond to one of the mobile communication systems standardized by the 3^{rd} Generation Partnership Project (3GPP), e.g. Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile transceiver. In embodiments, the mobile communication system may comprise mobile transceivers, relay station transceivers and base station transceivers. The relay station transceivers and base station transceivers can be composed of one or more central units and one or more remote units.

A mobile transceiver may correspond to a smartphone, a cell phone, User Equipment (UE), a laptop, a notebook, a personal computer, a Personal Digital Assistant (PDA), a Universal Serial Bus (USB) -stick, a tablet computer, a car, etc. A mobile transceiver or terminal may also be referred to as UE or user in line with the 3GPP terminology. A base station transceiver can be located in the fixed or stationary part of the network or system. A base station transceiver may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller than a micro cell. A base station transceiver can be a wireless interface of a wired network, which enables transmission and reception of radio signals to a UE, mobile transceiver or relay transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc. A relay station transceiver may correspond to an intermediate network node in the communication path between a base station transceiver and a mobile station transceiver. A relay station transceiver may forward a signal received from a mobile transceiver to a base station transceiver, signals received from the base station transceiver to the mobile station transceiver, respectively.

The mobile communication system may be cellular. The term cell refers to a coverage area of radio services provided by a transmission point, a remote unit, a remote head, a remote radio head, a base station transceiver, relay transceiver or a NodeB, an eNodeB, respectively. The terms cell and base station transceiver may be used synonymously. In some embodiments a cell may correspond to a sector. For example, sectors can be achieved using sector antennas, which provide a characteristic for covering an angular section around a base station transceiver or remote unit. In some embodiments, a base station transceiver or remote unit may, for example, operate three or six cells covering sectors of 120° (in case of three cells), 60° (in case of six cells) respectively. Likewise a relay transceiver may establish one or more cells in its coverage area. A mobile transceiver can be registered or associated with at least one cell, i.e. it can be associated to a cell such that data can be exchanged between the network and the mobile in the coverage area of the associated cell using a dedicated channel, link or connection. A mobile transceiver may hence register or be associated with a relay station or base station transceiver directly or indirectly, where an indirect registration or association may be through one or more relay transceivers.

Embodiments of a mobile relay apparatus may improve the cellular coverage in a vehicle. A relay node may be used in order to connect multiple terminals inside of the vehicle and provide an aggregated connection to a stationary cellular communication system via a wireless backhaul link to a stationary cellular communications network, for example, over an external vehicle antenna. In the following the link between a stationary base station and an external antenna of a vehicle relay node will be denoted as relay link; the link between a relay node and end user terminals will be denoted as access link.

Such a relay node may, for example, correspond to a relay as defined in 3^{rd} Generation Partnership Project (3GPP) Release 10, a moving relay as currently discussed in 3GPP Release 12 study groups and in current research literature, a wireless repeater (analog or digital), or a femto cell with a wireless backhaul connection. In case of a femto cell, the wireless backhaul connection could be provided over a separate cellular communication terminal, e.g., a 2G/3G/4G modem. It is another finding that for the relay link and for the access link, respectively, the same or different frequency and spectrum resources can be used.

Note that in the following description of embodiments the term "femto cell" will be used as a synonym for the term "Home eNB" as used in 3GPP standards, for small cells, such as micro, pico, femto cells, etc., as well as relay nodes defined according to 3GPP Release 10 & following releases.

The transceiver module 12, which may comprise transmitter and receiver elements or components, may correspond to one or more transceiver units, one or more transceiver devices, any means for transceiving, etc. In embodiments a transceiver module 12 may comprise typical transmitter and/or receiver components. Such components may comprise one or more transmit and/or receive antenna connectors or antennas, a Low Noise Amplifier (LNA), a Power Amplifier (PA), one or more filters, one or more converters, one or more mixers, one or more duplexers, one or more diplexers etc.

A control module 14 may correspond to one or more control units, one or more control devices, or any means for controlling. In some embodiments a control module 14 may be implemented in software, which is executable on accordingly adapted hardware, such as a processor, a Digital Signal Processor (DSP), a multi-purpose processor, or the like.

According to the above, embodiments frequently obtain information related to measurement results, which may correspond to periodic measurements or also to event based measurements, for example, once a transceiver has moved for a certain time or over a certain distance such measurement may be carried out. As also depicted in Fig. 1 the second cell 200b overlaps the first radio cell 200a, such that in an overlapping area both cells may be measurable. For example, the second cell 200b may use a different radio access technology (e.g. 4G) than the first cell 200a (e.g. 3G).

In a further embodiment the control module 14 is configured to receive information related to measurement configurations from the mobile communication system 500, for example in terms of Radio Resource Control (RRC) measurements which may trigger periodic or event based reporting. The control module 14 is configured to frequently obtain the information related to measurement results on signals of the second radio cell 200b even if the information related to measurement configurations indicates measurements on one or more cells different from the second cell 200b. Hence, in such an embodiment the apparatus 10 measures the second cell although it may not have been configured to by the mobile communication system operating the first cell 100a the apparatus 10 or transceiver 100 is associated with. Hence, a transfer to the second cell 200b may nonetheless be affected.

In some embodiments the control module 14 may be configured to measure radio signals of the second radio cell 200b using the transceiver module 12. Depending on the capabilities of the transceiver module 12, the control module 14 may be configured to measure radio signals of the second radio cell 200b while interrupting the communication of the transceiver module 12 with the first cell 200a. Such interruption may go along with a state transfer of the transceiver 100.

Here and in the following an idle mode is to be understood as a state of a transceiver 100 or a backhaul modem in which it is associated with a cell of a base station transceiver 210a, 210b in terms of a registration, such that the transceiver 100 or backhaul modem can be reached in case of a network originated call. In idle mode the transceiver 100 or backhaul modem is assumed not to have an ongoing communication link to the mobile communication system 500, however, the mobile communication system 500 has information on how to reach the transceiver 100 or backhaul modem, for example on a cell level, or on a routing/tracking area or a location area level, which may extend across multiple cells. The mobile communication system 500 may then page the transceiver 100 or modem in case an active connection for data exchange should be established through the said registration level, e.g. a cell or multiple cells of a routing area or location area the transceiver or backhaul modem 100 is camped on. The transceiver 100 or modem may then respond to such paging and establish an active communication link, for example, using according random access procedures, radio link establishment procedures, etc. The transceiver 100 or backhaul modem may then transfer to an active mode, in which a communication or radio link is established and data exchange can be carried out. As the transceiver 100 or backhaul modem moves through the cells of the mobile communication system 500 its location changes and so do the cells, which cover the location of the transceiver 100 or backhaul modem. The transceiver 100 or backhaul modem may then re-select cells to associate or register with in idle mode, and associate with or handover to different cells in active or connected mode.

In some embodiments the control module 14 may be configured to transfer the transceiver 100 to an inactive or idle state and to measure radio signals of the second radio cell 200b in the inactive or idle state. In idle or inactive state cell selection or re-selection procedures may be used. The control module 14 may be configured to affect deactivation of the communication between the transceiver 100 and the first cell 200a in case the second data rate is higher or potentially higher than the first data rate, and to affect the handover, association with the second cell 200b, respectively, by letting the transceiver 100 reselect the second cell 200b in an inactive mode.

As further illustrated by Fig. 1, the apparatus 10 may further comprise an optional receiver module 16, which is indicated by the broken lines in Fig. 1. The control module 14 may be configured to measure radio signals of the second radio cell 200b using the receiver module 16. The receiver module 16 may comprise typical receiver elements or components and it may correspond to one or more receiver units, one or more receiver devices, any means for receiving, etc. In embodiments a receiver module 16 may comprise typical receiver components. Such components may comprise one or more receive antenna connectors or antennas, an LNA, one or more filters, one or more converters, one or more mixers, one or more duplexers, one or more diplexers etc.

Some embodiments may use a second modem or receiver module 16 like device as sniffer to monitor the signal strength of a higher RAT (provided by the second cell 200b) independently of the normal backhaul modem, transceiver module 12, respectively. If the main modem (transceiver module 12) is stuck to a lower RAT and the second modem (receiver module 16) identifies a good signal on the higher RAT actions are taken to get the normal modem (transceiver module 12) back on that higher technology. The control module 14 may then be configured to measure radio signals of the second radio cell 200b using the receiver module 16 while the first transceiver module 12 communicates with the first cell 200a.

Embodiments may, for example, use one of the following two methods in connected mode. Some embodiments may stop the data traffic for some time (interrupt the transceiver module 12 from communicating with the first cell 200a), then waiting for the modem or transceiver 100 to transfer to an "inactive" state and perform reselection to the higher RAT (potentially speed up reselection process by providing information known from the sniffer device or receiver module) then continue the data transfer such that the connection is going to the "active" state on the new technology. Additionally or alternatively, embodiments may force the handover process to the higher RAT by sending "fake" measurements about bad signal strength of the current RAT. For example, the control module 14 may be further configured to affect the handover of the transceiver 100 by degrading information related to quality measurements carried out on signals of the first cell 200a. The control module 14 may be configured to provide information related to degraded measurement reports to the first cell 200a using the transceiver module 12.

In embodiments such faked, degraded or manipulated measurements results can be achieved in different ways. For example, the control module 14 may be configured to provide information related to absolute degraded measurement results or relative offsets for measurement results to degrade the measurement results of the first cell 200a. The network 500 comprising the first cell 200a may then initiate measurement procedures for the other RAT comprising the second cell 200b (e.g. compressed mode in UMTS). If results of the current RAT are requested these may need to be modified again by the apparatus 10 to finally make the handover algorithm in the mobile network 500 to trigger the HO to the higher RAT. Absolute measurement results to be reported for the serving cell or relative offsets values may be configurable in the modem or transceiver apparatus 10.

Moreover, in embodiments if the modem or transceiver 100 is in RRC Idle mode or in a connected state, where cell reselection is applied and the RF conditions of the higher RAT comprising the second cell 200b are good, then the modem or transceiver 100 may reselect the higher RAT independent of the inter-RAT cell search parameters broadcast in the serving cell and independent of the measurement results of the serving cell. In some embodiments the conditions for re-selection to the higher RAT cells may be configured in the modem or transceiver apparatus 10, for example, an inter-RAT search condition, minimum signal strength/quality of the higher RAT, cell individual offsets, etc.

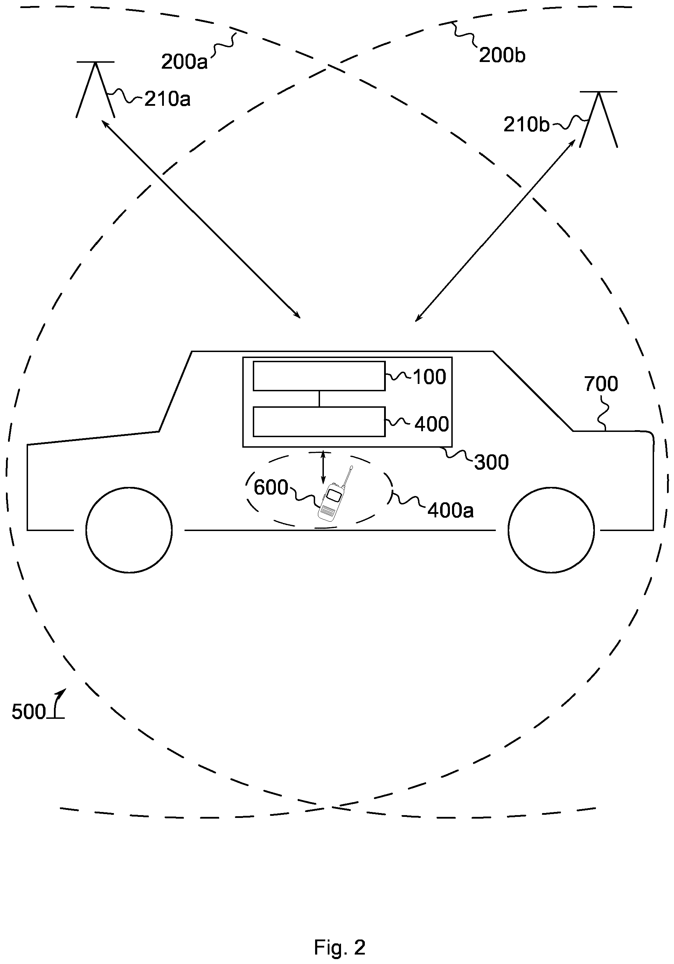

Fig. 2 shows a further embodiment of a mobile relay station transceiver 300, which comprises an embodiment of the above-described apparatus 10, the transceiver 100, respectively. The mobile relay station transceiver 300 comprises the transceiver 100 for communicating with the infrastructure of the mobile communication system 500, and the mobile relay station transceiver 300 comprises a base station transceiver 400 for generating one or more cells 400a to communicate with one or more mobile transceivers 600. As can be seen from Fig. 2 the coverage area or cell 400a of the base station transceiver 400 covers the inside of the vehicle 700, which corresponds to a car in the present embodiment; it could also correspond to any other vehicle, such as a train, a subway, a plane, a ship, a truck, etc.

In a further embodiment the control module 14 is configured to measure radio signals of the second radio cell 200b by instructing a mobile transceiver 600 to carry out measurements on radio signals of the second radio cell 200b and to report information related to measurement results. In an implementation in a relay transceiver station 300, the control module 14 may provide according measurement information to the base station transceiver 400, which may then configure the mobile transceiver 600 accordingly. The mobile transceiver 600 may then provide information related to according measurement results to the base station transceiver 400, which may forward same to the backhaul modem 100, where the results on the measurements on the second cell 200b can be evaluated. In some embodiments, in particular if the mobile transceiver is located inside a vehicle, such evaluation of measurements reports may include considering an additional attenuation of the vehicle's 700 body. Such information on the attenuation can be estimated or determined by comparing measurements on the signal of the first cell 200a, which are carried out by the transceiver 100 and to which the mobile transceiver 600 can also be configured to. Embodiments may use mobile transceivers of the mobile communication system as sensors for sensing whether other cells with potentially higher data rates are available.

Vehicular cells 400a are small cells residing inside a moving vehicle and connecting to a mobile network 500 for example via an Internet Protocol (IP) link that is transmitted over a Radio Frequency (RF) infrastructure (e.g. base station transceivers 210a, 210b) such as a 3GPP UMTS or 3GPP LTE network, also named backhaul network or mobile communication system 500 in this specification. Moreover, in the following a vehicular cell 400a corresponds to a cell radiating within the vehicle 700, an external cell 210a, 210b corresponds to a cell of a mobile network 500 outside of the vehicle 700 (such as the cells generated by base station transceivers 210a, 210b), an external base station corresponds to a base station outside of the vehicle 700 (e.g. base station transceivers 210a, 210b), the backhaul modem 100 corresponds to a device that provides a link to an external base station transceiver 210a, 210b carrying the backhaul (relay) link of the vehicular cell 400a, and a backhaul cell 200a, 200b corresponds to a cell of an external base station 210a, 210b able to connect the vehicular cell 400a with its serving mobile network 500. A further embodiment is hence the backhaul modem 100 of a mobile relay station transceiver 300 shown in Fig. 2 comprising an embodiment of the apparatus 10 as described above.

Embodiments may allow modem devices 100 that have continuous data traffic to go back from a lower to a higher RAT if this is available. Without an embodiment the device would be stuck at the lower RAT until the coverage of the lower RAT is getting bad (below a defined threshold). Using a separate sniffer device or the receiver module 16 as described above, an embodiment may trigger a move to the higher RAT even in good coverage of the lower RAT in idle and/or in connected mode. In some embodiments, a stripped down version of the mechanism could also be implemented without a sniffer device, as described above. In this case the modem 100 may detect that it is stuck on lower RAT (e.g. for some time) and then trigger one of the above-described methods without the knowledge of the signal strength on the higher RAT. This may cause some performance loss but would still get the desired result to go back to the higher RAT.

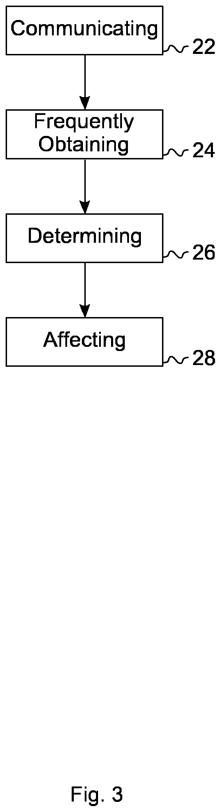

Fig. 3 shows a block diagram of a flow chart of an embodiment of a method for a base station transceiver 100 of a mobile communication system 500. The mobile communication system 500 comprises at least a first radio cell 200a. The method comprises communicating 22 with the at least first radio cell 200a using a first data rate, and frequently obtaining 24 information related to measurement results on signals of a second radio cell 200b. The second radio cell 200b is configured to provide a wireless service with a second data rate. The method further comprises determining 26 whether the second data rate of the second radio cell 200b is higher or potentially higher than the first rate, and affecting 28 handover or reselection of the transceiver 100 from the first cell 200a to the second cell 200b if the second data rate is higher or potentially higher than the first data rate.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for transceiving", "means for transmitting", "means for receiving", "means for controlling", etc., may be provided through the use of dedicated hardware, such as "a transceiver", "a transmitter", "a receiver", "a controller", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. An apparatus (10) for a transceiver (100) of a mobile relay station transceiver (300) of a mobile communication system (500), the mobile communication system (500) comprising at least a first radio cell (200a), the apparatus (10) comprising
a transceiver module (12) to communicate with the at least first radio cell (200a) using a first data rate;
a control module (14) to:
control the transceiver module (12),
obtain information related to measurement results on signals of a second radio cell (200b), the second radio cell (200b) being configured to provide a wireless service with a second data rate,
determine whether the second data rate of the second radio cell (200b) is potentially higher than the first rate, and
affect handover or reselection of the transceiver (100) from the first cell (200a) to the second cell (200b) if the second data rate is potentially higher than the first data rate; and
a receiver module (16), and wherein the control module (14) is configured to measure radio signals of the second radio cell (200b) using the receiver module (16), wherein the second cell (200b) overlaps the first radio cell (200a) and uses a different radio access technology than the first cell (200a), wherein the control module (14) is configured to measure radio signals of the second radio cell (200b) using the receiver (16) while the transceiver module (12) communicates with the first cell (200a).

2. The apparatus (10) of one of the preceding claims, wherein the control module (14) is configured to receive information related to measurement configurations from the mobile communication system (500), and wherein the control module (14) is configured to obtain the information related to measurement results on signals of the second radio cell (200b) if the information related to measurement configurations indicates measurements on one or more cells different from the second cell (200b).

3. The apparatus (10) of one of the preceding claims being configured to communicate with the infrastructure of the mobile communication system (500).

4. The apparatus (10) of one of the preceding claims, wherein the control module (14) is configured to affect deactivation of the communication between the transceiver (100) and the first cell (200a) in case the second data rate is potentially higher than the first data rate, and to affect the handover by letting the transceiver (100) reselect the second cell (200b) in an inactive mode.

5. The apparatus (10) of one of the preceding claims, wherein the control module (14) is further configured to affect the handover of the transceiver (100) by degrading information related to quality measurements carried out on signals of the first cell (200a), and/or wherein the control module (14) is configured to provide information related to degraded measurement reports to the first cell (200a) using the transceiver module (12).

6. The apparatus (10) of one of the preceding claims, wherein the control module (14) is configured to provide information related to absolute degraded measurement results or relative offsets for measurement results to degrade the measurement results of the first cell (200a).

7. A backhaul modem (100) of a mobile relay station transceiver (300) comprising the apparatus (10) of one of the preceding claims.

8. A method performed by a transceiver (100) of a mobile relay station transceiver (300) of a mobile communication system (500), the mobile communication system (500) comprising at least a first radio cell (200a), the method comprising communicating (22) with the at least first radio cell (200a) using a first data rate and a transceiver module (12);
obtaining (24) information related to measurement results on signals of a second radio cell (200b), the second radio cell (200b) being configured to provide a wireless service with a second data rate;
measuring, using a receiver module (16), radio signals of the second radio cell (200b) while communicating, using the transceiver module (12), with the first cell (200a);
determining (26) whether the second data rate of the second radio cell (200b) is potentially higher than the first rate;
affecting (28) handover or reselection of the transceiver (100) from the first cell (200a) to the second cell (200b) if the second data rate is potentially higher than the first data rate,
wherein the second cell (200b) overlaps the first radio cell (200a) and uses a different radio access technology than the first cell (200a).

9. A computer program having a program code for performing the method of claim 8, when the computer program is executed on a computer, a processor, or a programmable hardware component.

## Patentansprüche

1. Eine Vorrichtung (10) für einen Sendeempfänger (100) eines mobilen Relaisstation-Sendeempfängers (300) eines Mobilkommunikationssystems (500), das Mobilkommunikationssystem (500) umfassend zumindest eine erste Funkzelle (200a), die Vorrichtung (10) umfassend
ein Sendeempfängermodul (12), um mit der zumindest ersten Funkzelle (200a) unter Verwendung einer ersten Datenrate zu kommunizieren;
ein Steuerungsmodul (14) zum:
Steuern des Sendeempfängermoduls (12),
Erhalten von Information bezogen auf Messergebnisse zu Signalen einer zweiten Funkzelle (200b), wobei die zweite Funkzelle (200b) ausgebildet ist zum Bereitstellen eines drahtlosen Dienstes mit einer zweiten Datenrate,
Bestimmen, ob die zweite Datenrate der zweiten Funkzelle (200b) möglicherweise höher ist als die erste Datenrate, und
Beeinflussen von Übergabe oder Wiederwahl des Sendeempfängers (100) von der ersten Zelle (200a) zu der zweiten Zelle (200b), wenn die zweite Datenrate möglicherweise höher ist als die erste Datenrate; und
ein Empfängermodul (16), und wobei das Steuerungsmodul (14) ausgebildet ist zum Messen von Funksignalen von der zweiten Funkzelle (200b) unter Verwendung des Empfängermoduls (16), wobei die zweite Zelle (200b) die erste Funkzelle (200a) überlappt und eine unterschiedliche Funkzugriffstechnik verwendet als die erste Funkzelle (200a), wobei das Steuerungsmodul (14) ausgebildet ist zum Messen von Funksignalen der zweiten Funkzelle (200b) unter Verwendung des Empfängers (16), während das Sendeempfängermodul (12) mit der ersten Zelle (200a) kommuniziert.

2. Die Vorrichtung (10) gemäß einem der vorangehenden Ansprüche, wobei das Steuerungsmodul (14) ausgebildet ist zum Empfangen von Information bezogen auf Messkonfigurationen von dem Mobilkommunikationssystem (500), und wobei das Steuerungsmodul (14) ausgebildet ist zum Erhalten der Information bezogen auf Messergebnisse zu Signalen der zweiten Funkzelle (200b), wenn die Information bezogen auf Messkonfigurationen Messungen zu einer oder mehreren Zellen anzeigt, die sich von der zweiten Zelle (200b) unterscheiden.

3. Die Vorrichtung (10) gemäß einem der vorangehenden Ansprüche, die ausgebildet ist zum Kommunizieren mit der Infrastruktur des Mobilkommunikationssystems (500).

4. Die Vorrichtung (10) gemäß einem der vorangehenden Ansprüche, wobei das Steuerungsmodul (14) ausgebildet ist zum Beeinflussen der Deaktivierung der Kommunikation zwischen dem Sendeempfänger (100) und der ersten Zelle (200a), falls die zweite Datenrate möglicherweise höher ist als die erste Datenrate, und zum Beeinflussen der Übergabe, indem es den Sendeempfänger (100) die zweite Zelle (200b) in einem inaktiven Modus wiederwählen lässt.

5. Die Vorrichtung (10) gemäß einem der vorangehenden Ansprüche, wobei das Steuerungsmodul (14) ferner ausgebildet ist zum Beeinflussen der Übergabe des Sendeempfängers (100) durch Degradieren von Information bezogen auf Qualitätsmessungen, die zu Signalen der ersten Zelle (200a) durchgeführt werden, und/oder wobei das Steuerungsmodul (14) ausgebildet ist zum Bereitstellen von Information bezogen auf degradierte Messberichte an die erste Zelle (200a) unter Verwendung des Sendeempfängermoduls (12).

6. Die Vorrichtung (10) gemäß einem der vorangehenden Ansprüche, wobei das Steuerungsmodul (14) ausgebildet ist zum Bereitstellen von Information bezogen auf absolute degradierte Messergebnisse oder relative Versätze für Messergebnisse, um die Messergebnisse der ersten Zelle (220a) zu degradieren.

7. Ein Backhaul-Modem (100) eines mobilen Relaisstation-Sendeempfängers (300), umfassend die Vorrichtung (10) gemäß einem der vorangehenden Ansprüche.

8. Ein durch einen Sendeempfänger (100) eines mobilen Relaisstation-Sendeempfängers (300) eines Mobilkommunikationssystems (500) ausgeführtes Verfahren, das Mobilkommunikationssystem (500) umfassend zumindest eine erste Funkzelle (200a), das Verfahren umfassend
Kommunizieren (22) mit der zumindest ersten Funkzelle (200a) unter Verwendung einer ersten Datenrate und eines Sendeempfängermoduls (12);
Erhalten (24) von Information bezogen auf Messergebnisse zu Signalen einer zweiten Funkzelle (200b), wobei die zweite Funkzelle (200b) ausgebildet ist zum Bereitstellen eines drahtlosen Dienstes mit einer zweiten Datenrate;
Messen, unter Verwendung eines Empfängermoduls (16), von Funksignalen der zweiten Funkzelle (200b) während der Kommunikation, unter Verwendung des Sendeempfängermoduls (12), mit der ersten Zelle (200a);
Bestimmen (26), ob die zweite Datenrate der zweiten Funkzelle (200b) möglicherweise höher ist als die erste Datenrate;
Beeinflussen (28) von Übergabe oder Wiederwahl des Sendeempfängers (100) von der ersten Zelle (200a) zu der zweiten Zelle (200b), wenn die zweite Datenrate möglicherweise höher ist als die erste Datenrate,
wobei die zweite Zelle (200b) die erste Funkzelle (200a) überlappt und eine unterschiedliche Funkzugriffstechnik verwendet als die erste Funkzelle (200a).

9. Ein Computerprogramm mit einem Programmcode zum Durchführen des Verfahrens gemäß Anspruch 8, wenn das Computerprogramm auf einem Computer, einem Prozessor oder einer programmierbaren Hardwarekomponente ausgeführt wird.

## Revendications

1. Appareil (10) pour un émetteur-récepteur (100) d'un émetteur-récepteur de station de relais mobile (300) d'un système de communication mobile (500), le système de communication mobile (500) comprenant au moins une première cellule radio (200a), l'appareil (10) comprenant
module émetteur-récepteur (12) pour communiquer avec l'au moins première cellule radio (200a) à l'aide d'un premier débit de données ;
module de commande (14) pour :
contrôler le module émetteur-récepteur (12),
obtenir des informations relatives aux résultats de mesure sur des signaux d'une deuxième cellule radio (200b), la deuxième cellule radio (200b) étant configurée pour fournir un service sans fil avec un deuxième débit de données,
déterminer si le deuxième débit de données de la deuxième cellule radio (200b) est potentiellement plus élevé que le premier débit, et
affecter le transfert intercellulaire ou la re-sélection de l'émetteur-récepteur (100) de la première cellule (200a) à la deuxième cellule (200b) si le deuxième débit de données est potentiellement plus élevé que le premier débit de données ; et
module récepteur (16), et dans lequel le module de commande (14) est configuré pour mesurer des signaux radio de la deuxième cellule radio (200b) à l'aide du module récepteur (16), dans lequel la deuxième cellule (200b) chevauche la première cellule radio (200a) et utilise un autre technologie d'accès radio que la première cellule radio (200a), dans lequel le module de commande (14) est configuré pour mesurer des signaux radio de la deuxième cellule radio (200b) à l'aide du récepteur (16), lorsque le module émetteur-récepteur (12) communique avec la première cellule (200a).

2. Appareil (10) selon l'une des revendications précédentes, dans lequel le module de commande (14) est configuré pour recevoir des informations relatives aux configurations de mesure du système de communication mobile (500), et dans lequel le module de commande (14) est configuré pour obtenir des informations relatives aux résultats de mesure sur des signaux de la deuxième cellule radio (200b) si les informations relatives aux configurations de mesure indiquent des mesures sur une ou plusieurs cellules différentes de la deuxième cellule (200b).

3. Appareil (10) selon l'une des revendications précédentes, étant configuré pour communiquer avec l'infrastructure du système de communication mobile (500).

4. Appareil (10) selon l'une des revendications précédentes, dans lequel le module de commande (14) est configuré pour affecter la désactivation de la communication entre l'émetteur-récepteur (100) et la première cellule (200a) dans le cas où le deuxième débit de données est potentiellement plus élevé que le premier débit de données, et pour affecter le transfert intercellulaire en laissant l'émetteur-récepteur (100) re-sélecter la deuxième cellule (200b) dans un mode inactif.

5. Appareil (10) selon l'une des revendications précédentes, dans lequel le module de commande (14) est en outre configuré pour affecter le transfert intercellulaire de l'émetteur-récepteur (100) en dégradant des informations relatives aux mesures de qualité effectuées sur des signaux de la première cellule (200a), et/ou dans lequel le module de commande (14) est configuré pour fournir des informations relatives aux rapports de mesure dégradés à la première cellule (200a) à l'aide du module émetteur-récepteur (12).

6. Appareil (10) selon l'une des revendications précédentes, dans lequel le module de commande (14) est configuré pour fournir des informations relatives aux résultats de mesure dégradés absolus ou des décalages relatifs pour des résultats de mesure afin de dégrader les résultats de mesure de la première cellule (200a).

7. Un modem de raccordement (100) d'un émetteur-récepteur de station de relais mobile (300) comprenant l'appareil (10) de l'une des revendications précédentes.

8. Procédé effectué par un émetteur-récepteur (100) d'un émetteur-récepteur de station de relais mobile (300) d'un système de communication mobile (500), le système de communication mobile (500) comprenant au moins une première cellule radio (200a), le procédé comprenant
communiquer (22) avec l'au moins première cellule radio (200a) à l'aide d'un premier débit de données et un module émetteur-récepteur (12) ;
obtenir (24) des informations relatives aux résultats de mesure sur des signaux d'une deuxième cellule radio (200b), la deuxième cellule radio (200b) étant configurée pour fournir un service sans fil avec un deuxième débit de données ;
mesurer, á l'aide d'un module récepteur (16), des signaux radio de la deuxième cellule radio (200b) tout en communiquant, à l'aide du module émetteur-récepteur (12) avec la première cellule (200a) ;
déterminer (26) si le deuxième débit de données de la deuxième cellule radio (200b) est potentiellement plus élevé que le premier débit ;
affecter (28) le transfert intercellulaire ou la re-sélection de l'émetteur-récepteur (100) de la première cellule (200a) à la deuxième cellule (200b) si le deuxième débit de données est potentiellement plus élevé que le premier débit de données ; et
dans lequel la deuxième cellule (200b) chevauche la première cellule radio (200a) et utilise une autre technologie d'accès radio que la première cellule (200a).

9. Programme d'ordinateur présentant un code de programme configuré pour réaliser le procédé selon la revendication 8, lorsque le programme d'ordinateur est exécuté sur un ordinateur, un processeur ou un composant matériel programmable.
